# EUROPEAN PATENT APPLICATION

(11) **EP 1 777 059 A2**
(43) Date of publication of application: **25.04.2007**
(21) Application number: 06255346.6
(22) Date of filing: 17.10.2006
(51) Int. Cl.: B29C 65/16

(54) **Method and apparatus for laser welding thermoplastic resin members**

(30) Priority: 19.10.2005 JP 2005303897
(71) Applicant: Toyota Jidosha Kabushihi Kaisha, Aichi-ken Toyota-shi 471-8571 (JP); E.I. du Pont de Nemours and Company, Wilmington, DE 19898 (US)
(72) Inventor: Watanabe, Toshio c/o Toyota Jidosha K. K., Toyota-shi, Aichi-ken 471-8571 (JP); Nakajima, Katsuhiko c/o Toyota Jidosha K. K., Toyota-shi, Aichi-ken 471-8571 (JP); Nakamura, Hideo c/o Toyota Jidosha K. K., Toyota-shi, Aichi-ken 471-8571 (JP); Mori, Hiroshi c/o Du Pont Kabushiki Kaisha, Tokyo 100-6111 (JP); Fujita, Susumu c/o Du Pont Kabushiki Kaisha, Utsunomiya-shi, Tochigi 321-3231 (JP); Nakatani, Mitsunobu c/o Du Pont Kabushiki Kaisha, Utsunomiya-shi, Tochigi 321-3231 (JP)
(74) Representative: Smith, Samuel Leonard

(57) **Abstract**

A method and apparatus for laser welding two members made of thermoplastic resin material whereby high welding strength can be achieved and strength variations can be reduced. A first member 2 comprised of a transmissive thermoplastic resin that transmits a laser beam is brought into contact with a second member 3 comprised of an absorptive thermoplastic resin that absorbs a laser beam. Contact surfaces 4 are melted with a laser beam so as to join the two members. At least the contact surfaces 4 of the two members are pre-heated by a pre-heating means 20 at a temperature lower than the melting temperature of the contact surfaces. The contact surfaces 4 are then irradiated with a laser beam R generated by a laser beam generator 10 that is shone from the side of the first member so as to melt at least one of the contact surfaces of the two members. The melted portion is then post-heated by a post-heating means 20A at a temperature lower than the melting temperature of the melted portion, thereby allowing the melted portion to slowly cool down. The pre-heating and the post-heating are preferably conducted at temperatures above the glass transition temperature of the two members.

## Description

### BACKGROUND OF THE INVENTION

### Field of the Invention

The invention relates to a method and apparatus for laser welding thermoplastic resin members. In particular, the invention relates to a method and apparatus for joining a member formed of a transmissive thermoplastic resin that transmits a laser beam with a member formed of an absorptive thermoplastic resin that absorbs a laser beam by melting them.

### Background Art

In response to the demand in recent years for reducing the weight and cost of components in various fields, such as automobile components, such components are often made of resin materials and formed as resin molded items. When a resin molded item having a complex shape is to be formed, a plurality of component parts of the resin molded item are molded in advance and then jointed together by welding for productivity enhancing purposes.

A conventional example of the method for laser welding thermoplastic resin members of the aforementioned type is disclosed in Patent Document 1. In this method, a contact boundary between a transmissive resin that is transmissive to a laser beam as a heat source and a non-transmissive resin material that is non-transmissive to a laser beam is irradiated with a laser beam from the transmissive resin material side so as to heat and melt it so that the two resins can be welded. Specifically, at least one of the contact surfaces, of which the contact boundary between the transmissive resin material and the non-transmissive resin material is formed, is heated and softened. Laser beam irradiation is performed while the transmissive resin material and the non-transmissive resin material are pressed against each other.

Patent Document 1: JP Patent Publication (Kokai) No. 2004-188802 A

### SUMMARY OF THE INVENTION

In the aforementioned method for laser welding resin members, laser welding is performed after the contact boundary is softened. Therefore, even if there is a large gap in the contact boundary between the resins, such gap can be eliminated when laser beam irradiation is performed. As a result, development of welding failures can be brought under control. However, the method has been problematic in that, due to the insufficient and uneven crystallinity that exists upon cooling of the welded area, for example, the welding strength has proven insufficient, and variations in strength have been large. Furthermore, in order to prevent the variation in welding performance due to the large influence of the environment in which the welded members are placed, or when high-melting-point resin members are to be laser welded, a high-output laser is required, resulting in high equipment cost.

These problems are believed to result from the difference in cooling rates at different areas of the resin component to be welded, which is caused by the structural thermal capacity of the component, resulting in different degrees of crystallinity at different locations. Another reason is believed to be the fluctuation in the cooling rate depending on the environment where the resin components to be welded are disposed.

In view of these problems, it is an object of the invention to provide a method and apparatus for laser welding two members comprised of thermoplastic resin materials by irradiating them with a laser beam, whereby a high welding strength can be achieved and the strength variations can be reduced. It is another object of the invention to provide an apparatus for laser welding thermoplastic resin members that is not easily subject to the influences of environmental factors and that has a simple structure, whereby a constant welding performance can be achieved even with high-melting-point resin members, using a low-power laser with low equipment cost.

In order to achieve the aforementioned objects, the invention provides a method for laser welding thermoplastic resin members, comprising bringing a first member comprised of a transmissive thermoplastic resin that transmits a laser beam into contact with a second member comprised of an absorptive thermoplastic resin that absorbs a laser beam, melting their contact surfaces, and welding the two members, the method further comprising:
bringing the first member and the second member into contact with each other, pre-heating at least the contact surfaces of the two members at a temperature lower than their melting temperatures, irradiating the contact surfaces with a laser beam that is shone from the side of the first member, melting at least one of the contact surfaces of the two members, and then post-heating the melted portion at a temperature lower than its melting temperature.

The temperatures for pre-heating and post-heating are preferably above the glass transition temperature that is lower than the melting temperature of the thermoplastic resin. Preferably, when the two members are brought into contact with each other, they are pressed such that they are in close contact with each other.

In the aforementioned method for laser welding thermoplastic resin members according to the invention, the first and second members are brought into contact with each other, at least the contact surfaces of the two members are pre-heated, and the contact surfaces are then irradiated with a laser beam shone from the side of the first member. After the contact surface of at least one of the two members is melted, the melted portion is post-heated. Thus, temperature variations can be reduced by the pre-heating, and the quenching of the melted portion at the contact surfaces can be prevented by the post-heating. The temperature of the melted portion is allowed to decrease with reduced unevenness in the cooling rate, so that the degree and uniformity of crystallinity can be increased. As a result, the strength at the welded portion can be increased and the strength variations can be reduced. Furthermore, because of the pre-heating of the two members, a stable welded portion with reduced welding strength variations can be obtained even when the laser beam used is of low output.

In a preferable embodiment of the method for laser welding thermoplastic resin members according to the invention, the pre-heating of the contact surfaces and the post-heating of the melted portion are conducted by heating the inside of a space in which the two members are housed. In this laser welding method, the two members are housed in the space within a casing, for example, and the inside of the casing is heated with a heater or the like so as to create a high-temperature environment. In this way, the two members can be pre-heated to a predetermined temperature so that the temperature variations in the members can be reduced. Because the melted portion at the contact surfaces that has been melted by the laser beam irradiation is post-heated so as to prevent the quenching thereof and allow the temperature to decrease slowly, the degree of crystallinity in the welded portion can be uniformly increased, strength improvements can be achieved, and the strength variations can be reduced. Namely, while quenching would render the melted portion amorphous, a high degree of crystallization can be achieved by slow cooling.

In another preferable embodiment of the method for laser welding thermoplastic resin members according to the invention, the pre-heating of the contact surfaces and the post-heating of the melted portion are conducted by blowing hot air at the two members. In this laser welding method, because the two members are heated by blowing hot air at them so as to pre-heat them to a predetermined temperature, temperature variations can be eliminated. By blowing hot air at the melted contact surfaces, the quenching of the melted portion can be prevented and the portion can be allowed to slowly cool down. Thus, the degree of crystallinity in the welded portion at the contact surfaces can be uniformly increased, strength improvements can be achieved, and strength variations can be reduced.

Preferably, the pre-heating of the contact surfaces and the post-heating of the melted portion are conducted by irradiating at least one of the contact surfaces of the two members with a preliminary laser beam that is shone from the side of the first member. Particularly, at least one of the contact surfaces is preferably heated to such an extent that it is softened. In this laser welding method, because at least one of the contact surfaces of the two members is irradiated with a preliminary laser beam such that it is heated and softened, the temperature variations due to the shape or the like of the two members can be reduced. After at least one of the contact surfaces is irradiated with a laser beam and melted, the contact surface is heated with the preliminary laser beam at a temperature lower than its melting temperature, whereby it is allowed to cool down slowly. As a result, the strength of the welded portion can be increased and the strength variations can be reduced.

In another embodiment of the method for laser welding thermoplastic resin members according to the invention, the method comprises bringing a first member comprised of a transmissive thermoplastic resin that transmits a laser beam into contact with a second member comprised of an absorptive thermoplastic resin that absorbs a laser beam, melting their contact surfaces with a laser beam, and welding the two members, the method further comprising:
bringing the first and the second members into contact with each other, irradiating the contact surfaces with a laser beam that is shone from the side of the first member, melting at least one of the contact surfaces of the two members, post-heating a melted portion of the two members at a temperature lower than its melting temperature, and then additionally post-heating the melted portion at an even lower temperature.

In accordance with this laser welding method, the contact surfaces of the first member and the second member are irradiated with a laser beam that is shone from the side of the first member, and at least one of the contact surfaces of the two members is melted and welded. Thereafter, the welded portion is post-heated at a temperature lower than the melting temperature and then additionally post-heated at an even lower temperature, thus allowing the melted portion to be cooled slowly. In this way, the degree of crystallinity in the welded portion can be uniformly increased, variations in welding strength can be reduced, and improved welding strength can be achieved.

The invention further provides an apparatus for laser welding thermoplastic resin members, wherein a first member comprised of a transmissive thermoplastic resin that transmits a laser beam is brought into contact with a second member comprised of an absorptive thermoplastic resin that absorbs a laser beam, and the contact surfaces of the two members are irradiated with a laser beam emitted by the laser beam generating means that is shone from the side of the first member so as to melt at least one of the contact surfaces and join them, the apparatus comprising:
a pre-heating means for pre-heating at least the contact surfaces of the first member and the second member at a temperature lower than their melting temperature;
a laser beam generating means for irradiating at least one of the contact surfaces of the first and the second members with a laser beam that is shone from the side of the first member; and
a post-heating means for post-heating the melted contact surfaces at a temperature lower than their melting temperature.

In accordance with this laser welding apparatus, after the first member and the second member are brought into contact with each other and at least their contact surfaces are pre-heated, at least one of the surfaces of the two members is melted. Therefore, a stable melted condition can be obtained. Furthermore, because of the post-heating of the melted portion after the melting, the quenching of the melted portion can be prevented and the portion is allowed to cool down slowly. As a result, the degree of crystallinity in the welded portion can be uniformly increased, the welding strength can be improved, and strength variations can be reduced.

Preferably, the pre-heating means and the post-heating means comprise a casing for housing the first member and the second member, and a heating means for heating the inside of the casing. In this embodiment, the volume inside the casing is heated with a heater or the like for pre-heating and post-heating, whereby temperature variations in the individual members can be reduced by the pre-heating prior to the melting of the contact surfaces of the two members by a laser beam, and a uniform melted condition can be achieved. In addition, because the melted portion is post-heated so as to prevent its rapid cooling and instead allow it to cool down slowly, the degree of crystallinity can be uniformly increased, the welding strength can be increased, and the strength variations can be reduced.

Preferably, the pre-heating means and the post-heating means comprise a hot air supply means for heating the first member and the second member. The hot air supply means may be arranged to blow hot air into the casing in which the two members are housed. Hot air is thus blown against the first and second members so as to pre-heat them to a predetermined temperature. At least one of the bonded surfaces is then melted so as to weld the two members, followed by post-heating the melted portion for slow cooling. In this way, the degree of crystallinity can be uniformly increased, the welding strength can be increased, and the strength variations can be reduced.

In yet another embodiment, the invention provides an apparatus for laser welding thermoplastic resin members wherein a first member comprised of a transmissive thermoplastic resin that transmits a laser beam is brought into contact with a second member comprised of an absorptive thermoplastic resin that absorbs a laser beam, wherein the contact surfaces are irradiated with a laser beam generated by a laser beam generating means so as to melt them and join the two members,
wherein the laser beam generating means comprises:
a first heating means for pre-heating the contact surfaces at a temperature lower than their melting temperature;
a second heating means for melting at least one of the contact surfaces; and
a third heating means for post-heating the contact surfaces at a temperature lower than their melting temperature.

The three heating means have different levels of energy that is supplied to the contact surfaces.

In accordance with this apparatus for laser welding thermoplastic resin members, at least the contact surfaces of the two members are pre-heated by the first heating means having a low energy density so as to reduce temperature variations. At least one of the contact surfaces is melted with the second heating means having a high energy density, and is then allowed to slowly cool down by the third heating means having a low energy density. In this way, the degree of crystallinity in the welded portion can be uniformly increased and its strength can be increased while the strength variations can be reduced. Furthermore, because at least one,of the contact surfaces is pre-heated with the second heating means before it is melted, resin members having high melting points can be welded without using a high-output laser beam.

Preferably, the first, the second, and the third heating means separate the laser beam generated by a single laser beam generating means, the second heating means constitutes a main-heating means and has an intensity distribution of the top-hat distribution type, and the first and the third heating means generate a laser beam having an intensity distribution of the Gaussian distribution type. In accordance with this structure, the pre-heating, the main-heating for melting at least one of the contact surfaces, and the post-heating of the melted portion for slow cooling can be performed using a single laser beam generating means. Thus, the apparatus structure can be simplified, in addition to achieving increased welding strength and reduced strength variations.

Preferably, the first, the second, and the third heating means are individually comprised of separate laser beam generating means, wherein the second heating means constitutes a main-heating means and generates a laser beam having an intensity distribution of the top-hat distribution type, and the first and third heating means generate a laser beam having an intensity distribution of the Gaussian distribution type. In this structure, the first and the third heating means having a low energy density constitute a pre-heating means and a post-heating means, respectively, while at least one of the contact surfaces is melted with the second heating means having a high energy density. In this way, the welding strength can be enhanced and the strength variations can be reduced. Furthermore, the outputs of the pre-heating means and the post-heating means can be freely adjusted, enabling the condition of the welded portion to be adjusted depending on the shape of the two members.

The first, the second, and the third heating means are individually comprised of separate laser beam generating means, wherein the second heating means constitutes a main-heating means and generates a laser beam the focal position of which is coincident with the contact surfaces, and the first and third heating means generate a laser beam, the focal position of which is not coincident with the contact surfaces. In accordance with this structure, energy density can be varied by adjusting the focal position of the three laser beam generating means having the same output during the pre-heating, the melting of the contact surfaces, and the post-heating. Thus, the welding strength can be increased and the strength variations can be reduced.

In another embodiment of the apparatus for laser welding thermoplastic resin members according to the invention, a first member comprised of a transmissive thermoplastic resin that transmits a laser beam is brought into contact with a second member comprised of an absorptive thermoplastic resin that absorbs a laser beam, wherein their contact surfaces are irradiated with a laser beam so as to melt them and join the members, the apparatus comprising:
a laser beam generating means for irradiating the first and the second members with a laser beam that is shone from the side of the first member so as to melt at least one of the contact surfaces; and
a focus-adjusting transfer means for moving the laser beam generating means and adjusting the focal position of the laser beam that is generated,
wherein the density of energy with which the contact surfaces are heated is adjusted by adjusting the focal position of the laser beam.

In the thus constructed laser welding apparatus, the contact surfaces of the two members are irradiated with the laser beam emitted by the laser beam generating means such that the laser beam is out of focus. In this way, the contact surfaces can be heated with a low energy density and thereby pre-heated without melting them, whereby temperature variations can be reduced. This is followed by irradiating the contact surfaces with a laser beam focused at the contact surfaces so as to heat and melt them with high energy density. The contact surfaces are then irradiated with a laser beam that is not focused at the contact surfaces, so as to heat them with a low energy density for post-heating. Thus, the melted portion of the contact surfaces can be allowed to cool down slowly such that the degree of crystallinity can be uniformly increased, thereby achieving an increase in welding strength and a reduction in strength variations.

In the laser welding method and apparatus according to the present invention, the type of the resin used as the transmissive thermoplastic resin that transmits a laser beam is not particularly limited and any resin can be used as long as it is thermoplastic and capable of transmitting the laser beam as the heat source. Examples include polyamides (PA) such as nylon 6 (PA6) or nylon 66 (PA66), polyethylene (PE), polypropylene (PP), styrene-acrylonitrile copolymer, polyethylene terephthalate (PET), polystyrene, ABS, polymethylmethacrylate (PMMA), polycarbonate (PC), and polybutylene terephthalate (PBT). Reinforcing fibers, such as glass fiber or carbon fiber, or a coloring agent may be added as needed. By "transmitting a laser beam," it is herein meant that the resin has a transmissivity of preferably 20% or more, more preferably 50% or more, yet more preferably 80% or more, and particularly preferably 90% or more with respect to a laser beam.

The type of resin used as the absorptive thermoplastic resin that absorbs a laser beam is not particularly limited, and any resin can be used as long as it is thermoplastic and capable of absorbing the laser beam as the heating source without transmitting it. Examples include polyamides (PA) such as nylon 6 (PA6) or nylon 66 (PA66), polyethylene (PE), polypropylene (PP), styrene-acrylonitrile copolymer, polyethylene terephthalate (PET), polystyrene, ABS, polymethylmethacrylate (PMMA), polycarbonate (PC), polybutylene terephthalate (PBT), and PPS, with which a predetermined coloring agent such as carbon black, dye, or pigment is mixed. Reinforcing fibers such as glass fiber or carbon fiber may be added as needed. By "absorbing a laser beam," it is herein meant that the resin has transmissivity of preferably 10% or less, more preferably 5% or less, and yet more preferably 1% or less.

With regard to the combination of resins for use as the transmissive thermoplastic resin material or the absorptive thermoplastic resin material, the combination is preferably one of compatible materials. Examples of such combinations include those of nylon 6 and nylon 66, PET and PC, and PC and PBT, as well as those of resins of the same kind, such as nylon 6 and nylon 6, or nylon 66 and nylon 66.

In the laser welding method and apparatus according to the present invention, the type of a laser beam with which the contact surfaces of the two members are irradiated may be appropriately selected depending on the absorption spectrum of the transmissive resin material for transmitting a laser beam and the thickness (transmission length) thereof, for example. Examples of such a laser beam include an Nd: glass (neodymium³⁺: glass) laser, an Nd: YAG (neodymium³⁺: YAG) laser, ruby laser, a helium-neon laser, a krypton laser, an argon laser, a H₂ laser, an N₂ laser, and a semiconductor laser. More preferable examples are an Nd: YAG laser (wavelength of the laser beam: 1060 nm) and a semiconductor laser (wavelength of the laser beam: 500 to 1000 nm).

The output power of the laser beam is preferably 10 to 900W. If the output power of the laser beam is less than 10W, it becomes difficult to melt the contact surfaces of the resin members. If the output power exceeds 900W, the resin material might evaporate or be transformed in quality.

In accordance with the method and apparatus of the invention for laser welding thermoplastic resin members, two members comprised of thermoplastic resin can be welded uniformly with high welding strength, whereby a constant welding performance can be achieved. Further, the method and apparatus enable even those resin members having high melting points to be welded with high welding strengths and reduced strength variations, using a low-output laser with low equipment cost. In accordance with the invention, no burrs or the like are produced at the welded portion, whereby the quality of the welded resin materials can be enhanced.

### BRIEF DESCRIPTION OF THE DRAWINGS

Fig. 1 shows a main portion of the laser welding apparatus according to a first embodiment of the invention.
Fig. 2 shows a main portion of the laser welding apparatus according to a second embodiment of the invention.
Fig. 3 shows a main portion of the laser welding apparatus according to a third embodiment of the invention.
Fig. 4 shows a main portion of the laser welding apparatus according to a fourth embodiment of the invention.
Fig. 5 shows a main portion of the laser welding apparatus according to a fifth embodiment of the invention.
Fig. 6 shows a main portion of the laser welding apparatus according to a sixth embodiment of the invention.

### DESCRIPTION OF PREFERRED EMBODIMENTS

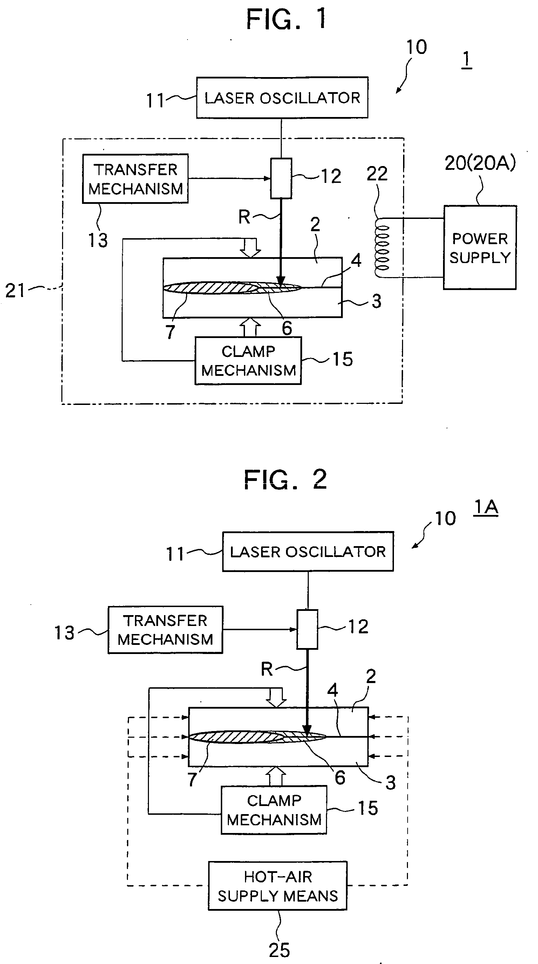

Hereafter, a first embodiment of the method and apparatus for laser welding thermoplastic resin members in accordance with the invention is described with reference to the drawings. Fig. 1 shows a main portion of the apparatus for laser welding thermoplastic resin members according to the present embodiment.

In a laser welding apparatus 1 of the embodiment shown in Fig. 1, a first member 2 made of a transmissive thermoplastic resin that transmits a laser beam is brought into contact with a second member 3 made of an absorptive thermoplastic resin that absorbs a laser beam, and the two members are joined by melting their contact surfaces 4 with a laser beam. The laser welding apparatus 1 includes a pre-heating means 20 for pre-heating at least the contact surface 4 between the first member 2 and the second member 3 at temperatures lower than their melting temperatures, a laser beam generator 10 for irradiating the contact surfaces 4 with a laser beam from the side of the first member 2 so as to melt at least one of the contact surfaces of the first member 2 and the second member 3, and a post-heating means 20A for post-heating the contact surface(s) 4 that has been melted to a temperature lower than their melting temperatures.

The pre-heating means 20 heats the two members 2 and 3 to temperatures such that they are not melted, such as temperatures above the glass transition temperature (Tg), for example. The post-heating means 20A also heats the two members 2 and 3 to temperatures such that the members will not be melted. In the present embodiment, the pre-heating means and the post-heating means include a casing 21 in which the two members can be housed and a heating means such as a heater 22 for heating the space within the casing. Thus, the casing 21 and the heater 22 are used for both pre-heating and post-heating purposes. Therefore, the two members can be heated to a predetermined temperature by the heater before welding the respective contact surfaces, and then slowly cooled after welding by heating the welded area with the heater, thereby preventing the quenching of the welded area.

The laser beam generator 10 is comprised of a laser oscillator 11 and a laser head 12 coupled with the laser oscillator via optical fiber. The laser beam generated by the laser head is semiconductor laser with the wavelength of 940 nm, for example, with an output power preferably in the range of approximately 10 to 900W. The laser head 12 is linked with a transfer mechanism 13 for transferring the laser head during welding at the processing speed of 0.1 to 5 m/min, for example. For the transfer mechanism 13, various configurations may be employed as needed. Examples include a configuration where an industrial robot is coupled with the laser head 12, a configuration where a two-dimensional or three-dimensional stage is used for moving the members, a configuration where the focal position is controlled by a combination of optical lenses and mirrors, and a configuration where multiple locations are irradiated simultaneously using a plurality of laser heads.

The first member 2 is made of nylon 6 glass-reinforced material, for example, as a transmissive thermoplastic resin material. The second member 3 is made of a resin member consisting of nylon 6 glass-reinforced material mixed with carbon black or a coloring agent, for example. The second member 3, which is made of an absorptive thermoplastic resin material, is provided with a laser beam absorbing property by the mixing of carbon black or coloring agent. The second member 3 thus absorbs the laser beam, stores its energy, and emits heat.

The laser welding apparatus 1 is also equipped with a clamp mechanism 15 for pressing the two members 2 and 3 so as to cause them to be closely attached to each other. The clamp mechanism 15 is used for preventing the two members from separating from each other when the contact surface of at least one of them is melted by a laser beam for welding and joining the members, which causes the volume of the melted portion to increase. Thus, the clamp mechanism 15 is used to allow the two members to be welded evenly. The clamp mechanism 15 may be configured in various manners. For example, it may be comprised of a spring mechanism whereby the two members can be pressed against each other. It may also be designed such that the two members placed on a base and the like are pressed from above. Further alternatively, it may employ fluid pressure, such as hydraulic pressure, or compressed air for the pressing operation.

The transmissive thermoplastic resin material, of which the first member 2 is formed and that transmits a laser beam, preferably has a laser beam transmissivity of 20% or more, more preferably 50% or more, yet more preferably 80% or more, and particularly preferably 90% or more. The absorptive thermoplastic resin material, of which the second member 3 is formed and that absorbs a laser beam, preferably has a laser beam transmissivity of 10% or less, more preferably 5% or less, and further preferably 1% or less. The resin material of which the second member 3 is made hardly transmits a laser beam; therefore, it may be called an non-transmissive thermoplastic resin material. The second member 3 hardly transmits the laser beam with which it is irradiated and instead it absorbs most of the laser beam. As a result, the energy of the laser beam is stored inside the second member, causing it to emit heat.

The operation of the laser welding apparatus 1 for thermoplastic resin members thus constructed according to the present embodiment is described in the following. In the casing 21 of the laser welding apparatus 1, the first member 2 and the second member 3 are laid one on top of the other, and they are then pressed by the clamp mechanism 15 into an intimately adhered state. The two members are overlapped in such a manner that the member 2 with transmissivity is opposed to the laser head 12. As the heater 22 in the casing 21 is energized, the temperature inside the casing 21 increases, whereby the two members 2 and 3 are pre-heated to a predetermined temperature. This predetermined temperature is preferably above the glass transition temperature (Tg) of the two members. For example, the melting temperature of the two members is approximately 200 to 250°C, and the glass transition temperature is approximately 80 to 90°C. In this way, the two members 2 and 3 are pre-heated as a whole.

After the two members 2 and 3 have been pre-heated evenly, the laser oscillator 11 is activated so as to irradiate a welded region of the two members with a laser beam R from the laser head 12. Laser beam R is shone from the side of the first member 2, which transmits a laser beam, such that it is focused at the contact surface 4. Because the laser beam R is focused at the contact surfaces via the irradiation lens in the laser head, the second member 3, which absorbs the laser beam, generates heat in an upper area near the contact surfaces 4. When a predetermined amount of energy is delivered onto the contact surfaces, the second member 3 starts to melt in the area near the contact surfaces 4. This is followed by the melting of the contact surface of the first member 2. As a result, the first member 2 and the second member 3 are fused as the two melted portions 6 are fused. Thus, by moving the laser head 12 so as to extend the melted portion 6 as the contact surfaces 4 of the two members are welded, the welded portion of the two members can be extended continuously. Because the two members are pre-heated to a predetermined temperature in advance by the heating means 20, a stable melted state can be obtained even with a low-output laser.

Thereafter, the heater 22 is activated so as to perform post-heating, thereby preventing the quenching of the two members 2 and 3. The post-heating is conducted at temperatures of approximately 80 to 90°C, so that the melted portion, which has temperatures of 200 to 250°C or higher, can be prevented from losing temperature too quickly. If the melted portion were to be quenched, the crystallinity would decrease and the welding strength would become lower. In accordance with the invention, however, the crystallinity of the welded portion 7 can be increased uniformly due to the slow cooling by the post-heating step. As a result, the welding strength can be increased and the variations in strength can be reduced. Furthermore, no burrs protrude from the welded portion 7, such that an improved quality of the welding portion can be achieved. It is noted that the pre-heating and the post-heating may be conducted in a continuous manner including during a laser beam irradiation, or may be terminated during the operation of the laser beam generator 10.

A second embodiment of the invention is described with reference to Fig. 2, which shows a main portion of the laser welding apparatus according to the second embodiment. As compared with the previous embodiment, the present embodiment is characterized in that the means for pre-heating and post-heating is comprised of a hot air supply means for blowing hot air at the two members. Other substantially identical elements are designated with similar numerals and their detailed descriptions are omitted.

Referring to Fig. 2, a laser welding apparatus 1 A according to the second embodiment includes a hot air supply means 25 that functions as a pre-heating means and a post-heating means. The hot air supply means, which includes an electric heater and a fan (not shown), for example, blows heat produced by the electric heater at the two members to be welded, using the fan, for pre-heating or post-heating purposes. The amount of heat generated by the electric heater or the volume of air blown by the fan are set appropriately depending on the members to be welded. For example, when the two members are small and the portion to be welded is narrow, the amount of heat from the electric heater or the volume of air produced by the fan is set lower. Preferably, in the present embodiment, too, the temperatures for pre-heating or post-heating are set above the glass transition temperature of the two members.

In accordance with the thus constructed second embodiment, because the two members 2 and 3 to be welded are pre-heated by activating the hot air supply means 25, the temperature fluctuations in the two members can be reduced. Furthermore, because the two members are pre-heated, high-melting-point resin members can be melted evenly with a low-output laser beam. After one of the contact surfaces of the two members is melted by activating the laser beam generating means 10, the melted portion 6 is slowly cooled by the supply of hot air. Therefore, the degree of crystallinity in the welded portion 7 can be evenly increased, whereby a welded portion having a high welding strength and small strength variations can be obtained. The hot air supply means for pre-heating the two members may be constructed such that hot air is blown into a casing in which the two members are housed. Alternatively, hot air may be simply blown against the two members without using the casing.

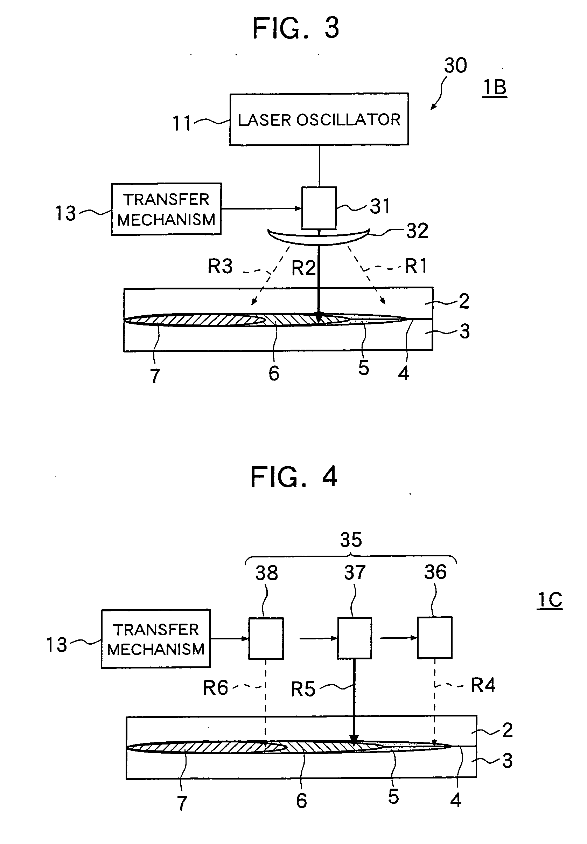

A third embodiment of the invention is described with reference to Fig. 3, which shows a main portion of the laser welding apparatus according to the third embodiment. As compared with the previous embodiments, the third embodiment is characterized in that the heating means for heating and melting the first and second members 2 and 3, as well as for carrying out pre-heating and post-heating, includes: a low-energy-density pre-heating means by which the laser beam generated by a single laser beam generating means is separated; a high-energy-density main heating means for melting the contact surfaces; and a low-energy-density post-heating means. Other substantially identical elements are designated with similar numerals and their descriptions are omitted.

Referring to Fig. 3, a laser welding apparatus 1B of the present embodiment includes a lens 32 as an optical means for separating the laser beam, which is generated by the laser head 31 of the laser beam generating means 30, into a central portion, a front, and a rear portion with respect to the direction in which welding takes place. Specifically, the laser beam generating means separates the laser beam generated by the laser head 31 using the lens 32, into: a laser beam R1 having Gaussian distribution as the low-energy-density pre-heating laser beam; a laser beam R2 having a top-hat distribution as the high-energy-density main-heating a laser beam; and a laser beam R3 having Gaussian distribution as the low-energy-density post-heating laser beam. The laser beam R1 as the pre-heating laser beam is located forwardly with respect to the direction of transfer by the transfer mechanism 13. The laser beam R3 as the post-heating laser beam is located rearwardly with respect to the direction of transfer. And the laser beam R2 as the main-heating a laser beam is located at a central position. The separating means may be comprised of an appropriate optical means, such as a beam splitter.

Thus, the energy distribution of the laser beam that has passed through the lens 32 is in the shape of an ellipse extended in the direction of transfer in a plan view, with a top-hat shaped (high luminance), high center portion, the intensity gradually decreasing toward the front and rear with respect to the direction of transfer along Gaussian curves (low luminance). In other words, the laser beam R2 at the center has high energy density, while the laser beams R1 and R3 in the front and rear with respect to the direction of transfer have low energy density.

The laser beam R2 with high energy density is shone from the side of the first member that transmits a laser beam, whereby the contact surface of at least one of the members 2 and 3 (specifically, the contact surface of the second member 3 that absorbs a laser beam) is heated strongly and melted. The low-energy-density a laser beam R1 that functions as the pre-heating means and the low-energy-density a laser beam R3 that functions as the post-heating means have energy levels such that they do not melt the contact surfaces of the two members 2 and 3. The pre-heating laser beam R1 and the post-heating laser beam R3 may have the same or different output powers. In order to reduce the welding time, the output power of the pre-heating means may be greater than that of the post-heating means. Thus, the individual output powers of the laser beams may be set appropriately depending on the two members.

In the thus constructed laser welding apparatus 1B, the laser beam generated by the laser head 31 is separated by the optical means 32 into three components, of which the laser beam R1 heats at least the contact surfaces 4 of the two members 2 and 3 from the left end of the figure to such an extent that the member are not melted. As the laser head is moved by the transfer mechanism 13, the pre-heated portion 5 extends, and the pre-heated portion 5 is irradiated with the laser beam R2, whereby the contact surfaces are melted and a melted portion 6 is formed. As the laser head further is moved by the transfer mechanism, the pre-heated portion 5 and the melted portion 6 are extended, and the melted portion is irradiated with the laser beam R3 for post-heating. The post-heating laser beam R3 prevents the rapid cooling of the melted portion 6 and allows it to cool slowly, thereby forming a welded portion 7. When the laser beam R3 is moved to the right end of the two members, the welding operation is completed.

Thus, during the welding, the first member 2 and the second member 3 are heated by the pre-heating laser beam R1 to an extent such that they are not melted, such as at temperatures above their glass transition temperature, for example, whereby temperature variations can be reduced. As the two members are melted by the laser beam R2, a uniform melted state is achieved, so that they can be melted uniformly without being influenced by the shape or the like of the members. Thereafter, the members are heated by the post-heating laser beam R3 for slow cooling, whereby the degree of crystallinity can be increased uniformly and an enhanced welding strength can be achieved. Because of the uniform melted state, strength variations can be reduced. The low energy density of the pre-heating laser beam R1 and post-heating laser beam R3 may be achieved by increasing the rate of transfer by the transfer mechanism; namely, by moving the laser head at a greater speed, so that the irradiated energy density can be reduced. The low-energy-density pre-heating laser beam R1 and post-heating laser beam R3, and the laser beam R2, may be shone little by little in a plurality of instances for output adjusting purposes. In the present embodiment, the apparatus structure can be simplified because of the dispersion of the laser beam generated by a single a laser beam generator for pre-heating, main-heating, and post-heating purposes.

A fourth embodiment of the invention is described with reference to Fig. 4, which shows a main portion of the laser welding apparatus according to the present embodiment. As compared with the previous embodiments, the present embodiment is characterized in that means 35 for pre-heating, main-heating, and post-heating includes individual laser beam generators. Specifically, a laser beam generator 36 for pre-heating constitutes a low-output generating unit, a laser beam generator 37 for main-heating constitutes a high-output generating unit, and a laser beam generator 38 for post-heating constitutes a low-output generating unit. Other substantially identical elements are designated with similar numerals and their detailed descriptions are omitted.

Referring to Fig. 4, a laser welding apparatus 1C of the present embodiment includes a laser beam generating means 35, which includes a laser beam generator (first heating means) 36 for pre-heating, a laser beam generator (second heating means) 37 for main-heating, and a laser beam generator (third heating means) 38 for post-heating. The main-heating laser beam generator 37 of the laser beam generating means 35 produces a laser beam R5 having a top-hat intensity distribution, with which high-energy-density heating can be conducted. The main-heating laser beam generator 37 emits a laser beam of the top-hat shape, with which the contact surfaces of the two members 2 and 3 are irradiated from the side of the first member, whereby at least one of the contact surfaces (namely, the surface of the second member 3 that absorbs the laser beam) can be strongly heated and melted.

The pre-heating laser beam generator 36 and the post-heating laser beam generator 38 produce pre-heating laser beam R4 and post-heating laser beam R6, respectively, that have Gaussian intensity distribution, with which low-energy-density heating can be conducted. The pre-heating and post-heating laser beam generators 36 and 38 irradiate the contact surfaces of the two members 2 and 3 with the laser beam having Gaussian intensity distribution so as to heat these contact surfaces. Because the laser beams R4 and R6 do not have enough energy to melt the resin, preferably areas near the contact surfaces are heated to temperatures above the glass transition temperature, for example, so that they can be softened. The three laser beam generators are linked at predetermined intervals and are moved along the two members using a transfer mechanism, which is not shown.

In accordance with this embodiment, when the first and second members 2 and 3 are welded, the contact surfaces of the two members are irradiated with the pre-heating laser beam R4 from the laser beam generator 36 of which the first heating means is comprised, from the side of the first member 2. The laser beam is absorbed by the second member 3, causing it to be pre-heated. As a result, the contact surfaces are heated to temperatures such that they do not melt. The pre-heated areas are slowly moved by the transfer mechanism 13, and the pre-heated portion 5 is irradiated with the high-energy-density laser beam R5 from the laser beam generator 37, whereby at least one of the contact surfaces is heated and melted. Then, the two members are welded via the melted portion 6, and the welded portion is extended by the transfer mechanism.

Thereafter, the welded portion is irradiated with the low-energy-density post-heating laser beam R6 from the laser beam generator 38, whereby the welded portion is prevented from being quenched and is instead slowly cooled. Thus, the slowly cooled areas increase as the transfer mechanism is operated. In this way, the contact surfaces are pre-heated by the laser beam R4 from the laser beam generator 36, melted by the laser beam R5 from the laser beam generator 37, and then slowly cooled by the laser beam R6 from the laser beam generator 38, before the two members 2 and 3 are welded. Because of the pre-heating by the laser beam R4, the welded portion can be melted by the laser beam R5 in a state of reduced temperature variation. And because the welded portion is slowly cooled by the laser beam R6 after melting, the degree and uniformity of crystallinity can be improved, whereby the welding strength can be increased and the strength variations can be reduced. The laser beams R4, R5, and R6 are not limited to those of the top-hat or Gaussian distribution type, and their individual outputs may be changed such that the laser beam R5 has a high energy intensity while the laser beams R4 and R6 have a low energy intensity. In the present embodiment, because the amount of heat for the pre-heating, main-heating, and post-heating, can be adjusted as needed by adjusting the energy densities of the three laser beam generators, optimum welding can be conducted depending on the shape or volume of the two members.

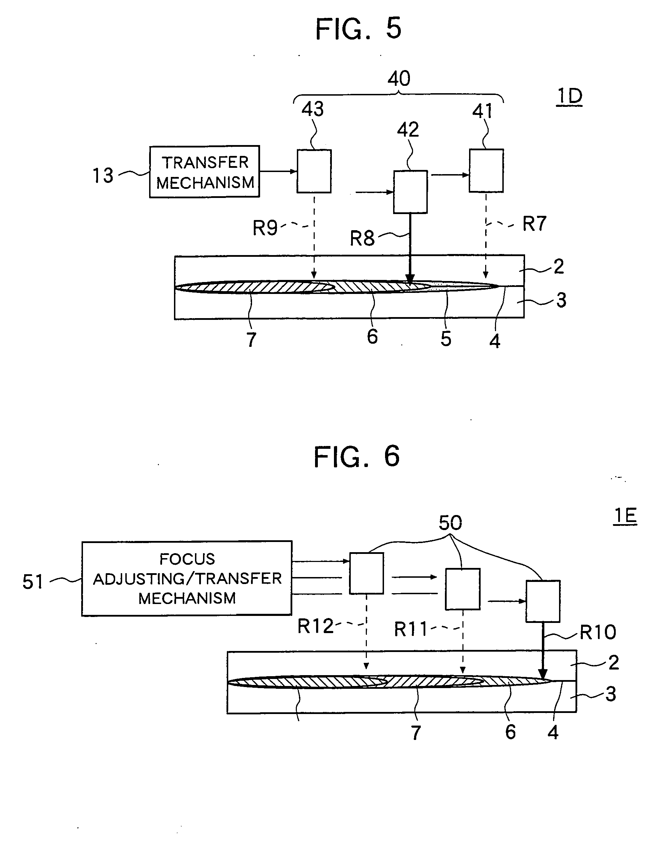

A fifth embodiment of the invention is described with reference to Fig. 5, which shows a main portion of the laser welding apparatus according to the fifth embodiment. A laser welding apparatus 1D includes: a laser beam generator 41 as the laser beam generating means 40 constituting a heating means 41 for pre-heating; a laser beam generator 42 for main-heating; and a laser beam generator 43 for post-heating. The laser beam generator 41 for pre-heating irradiates the two members from the direction of the first member 2 that transmits a laser beam. The focus point of the irradiating lens of the laser head is adjusted such that it does not coincide with the contact surfaces of the two members 2 and 3. Specifically, the pre-heating laser beam R7 is focused above the contact surfaces, so that the energy density at the contact surfaces is reduced.

In the laser beam generator 42 for main-heating, the irradiating lens of the laser head is in focus such that the focal point coincides with the contact surfaces. Thus, the main-heating laser beam generator 42 produces a high energy density at the contact surfaces so that the contact surfaces can be heated and melted with the laser beam R8, which is shone from the side of the first member 2. The laser beam generator 43 for post-heating also irradiates the members from the side of the first member 2, and the irradiating lens of the laser head thereof is adjusted such that its focal point does not coincide with the contact surfaces. Specifically, the laser beam R9 for post-heating is focused above the contact surfaces such that the energy density at the contact surfaces is reduced. Other substantially identical elements are designated with similar numerals and their detailed descriptions are omitted.

In the thus constructed laser welding apparatus 1D, the pre-heating laser beam R7 generated by the pre-heating laser beam generator 41 is not focused but rather blurred at the contact surfaces, so that pre-heating is conducted with low energy density. As a result, the contact surfaces of the two members 2 and 3 are not melted and instead a pre-heated portion 5 is formed. Because the laser beam R8 from the main-heating laser beam generator 42 is focused at the contact surfaces of the two members 2 and 3, the laser beam is concentrated at a single spot with a high energy density, the contact surfaces are rapidly heated and melted, thereby forming a melted portion 6. A stable melting temperature and a uniform melt state can be achieved thanks to the pre-heating by which the temperature of the contact surfaces can be maintained at a certain level.

Thereafter, the melted portion 6 is heated with low energy density by the post-heating laser beam R9 generated by the post-heating laser beam generator 43, whereby the rapid cooling of the melted portion is prevented when a welded portion 7 is formed. Thus, the degree of crystallinity in the welded portion 7, which is formed by the cooling of the melted portion, can be uniformly increased, whereby enhanced welding strength can be achieved. Furthermore, because of the uniform melt state, variations in welding strength can be reduced. Thus, in accordance with the present embodiment, the three laser beam generators can be adjusted in the vertical direction, whereby three kinds of heating can be performed; namely, the pre-heating, the main heating by which at least one of the contact surfaces is melted, and the post-heating by which the melted portion is allowed to be slowly cooled. The amount of heat produced in the pre-heating, main-heating, and post-heating can be freely adjusted.

A sixth embodiment of the invention is described with reference to Fig. 6, which shows a main portion of the laser welding apparatus according to the present embodiment. As compared with the previous embodiments, the present embodiment is characterized in that a single laser beam generating means is used for performing a first and a second post-heating for allowing the melted portion to be slowly cooled, as well as the main-heating for melting the contact surfaces. Specifically, a laser beam generated by a single laser head is shone from the side of a first member that transmits the laser beam and is focused at the contact surfaces of the two members for a main heating purpose. This is followed by the first post-heating where the laser beam generated by the same laser head is displaced out of focus. Then, the second post-heating is performed where the focus of the laser beam generated by the same laser head is further displaced.

Referring to Fig. 6, a laser welding apparatus 1E includes a laser beam generator 50 for melting at least one of the contact surfaces of the two members 2 and 3, and a focus-adjusting transfer means 51 for transferring the laser beam generator and adjusting the focal position of the laser beam generated thereby. The density of energy with which the contact surfaces are heated is adjusted by adjusting the focal position of the laser beam. Specifically, the focus-adjusting transfer means 51 causes the laser head of the laser beam generator 50 to be vertically as well as horizontally moved, such that the focal position of the laser beam generated by the laser head can be moved. By adjusting the focal position of the laser beam, the laser beam can be focused and high-energy-density heating can be performed. On the other hand, low-energy-density heating can be performed by placing the laser beam out of focus such that a wider area can be irradiated.

In the thus constructed laser welding apparatus 1 E, when the two members 2 and 3 are welded, a laser beam R10 is shone from the side of the first member while the focus of the laser beam generated by the laser head in the laser beam generator 50 is adjusted to coincide with the contact surfaces. As a result, at least one of the contact surfaces is heated with high energy density and thereby melted. The laser head in the laser beam generator 50 is then moved in the horizontal direction so as to extend the melted portion 6. After the laser head is moved by a predetermined stroke, the melting step is completed, the laser beam irradiation is terminated, and the laser head is returned to its original position (a first scan).

Thereafter, the laser head is raised by the focus-adjusting transfer mechanism 51 so as to displace the focal position of the irradiating laser beam R11 from the contact surfaces such that the position where the laser energy is concentrated is moved above the contact surfaces, where a first post-heating is performed with low energy density (second scan). The first post-heating needs to be performed when the temperature of the resin at the melted contact surfaces is above the glass transition temperature. Thus, the irradiating laser beam R11 is moved in the horizontal direction while the position in which the laser beam R11 is concentrated is displaced from the contact surfaces. In this way, low-density laser energy can be delivered onto the melted location, whereby the melted portion can be prevented from quenching and allowed to slowly cool down. As a result, the time in which an amount of energy exceeding that of the glass transition temperature is supplied can be extended, so that a welded portion 7 having uniformly enhanced crystallinity can be formed. The laser head is then moved by the focus-adjusting transfer mechanism 51 by a predetermined stroke, the first post-heating is completed, and the laser head is returned to its original position.

Thereafter, the laser head is further raised by the focus-adjusting transfer mechanism 51 so as to displace the focal position of the irradiating laser beam R12 with respect to the contact surfaces further, whereby the position in which the laser energy is concentrated is moved further above the contact surfaces 4, where a second post-heating is conducted with low energy density (third scan). The second post-heating also must be conducted when the temperature of the resin at the melted contact surfaces is higher than the glass transition temperature. Thus, as the laser beam is moved in the horizontal direction during irradiation, with the position where the laser beam R12 is concentrated displaced further from the contact surfaces 4, laser energy of even lower energy density is supplied to the melted location. As a result, the melted portion is allowed to cool down more slowly and the slow-cooling time can be greatly extended, so that the condition in which the glass transition temperature is exceeded can be maintained longer. This enables the formation of a highly crystallized welded portion 8 in which the degree of crystallinity is even more uniformly enhanced.

Thus, in accordance with the sixth embodiment, the focal position of the irradiating lens of the laser head is caused to coincide with the contact surfaces when the main-heating is conducted, so that the contact surfaces of the two members can be strongly heated and melted with the laser head and the members 2 and 3 can be welded. The temperature of the welded portion is on the order of 200 to 250°C. Thereafter, the first post-heating is conducted while the focal position of the irradiating lens of the laser head is not coincident with the contact surface of the two members, whereby the members are mildly heated and allowed to slowly cool down. Then, the second post-heating is conducted with the focal position displaced further so as to heat the melted portion even more mildly. As a result, the condition in which the glass transition temperature is exceeded can be maintained longer, so that the crystallinity of the melted portion can be uniformly increased. Thus, by mildly heating the welded portion twice, higher degrees of crystallization can be achieved in the welded portion, the welded strength can be increased, and the strength variations can be reduced. While in the present embodiment three scans were conducted with the laser head, scans may be conducted in a circular motion by moving the laser head in circles three times.

While the embodiments of the invention have been described, the invention is not limited by the foregoing embodiments, and various changes and modifications may be made within the scope and spirit of the invention recited in the claims. For example, the laser oscillator that constitutes the laser beam generating means may be integrally combined with the laser head and installed within the casing in a freely movable manner. Further, while the laser beam generating means has been described as being moved linearly, it may be moved along curves, or in a circle such that the laser beam generating means can be brought back to the original position.

Regarding the thermoplastic resin, it goes without saying that examples are not limited to those mentioned above but include general-purpose thermoplastic resin, general-purpose engineering plastic, super engineering plastic, and thermoplastic elastomer. Preferably, the transmissive thermoplastic resin that constitutes the first member and which transits a laser beam has a high transmissivity, and the absorptive thermoplastic resin that constitutes the second member and which absorbs a laser beam has a low transmissivity. The difference in transmissivity between the two members is preferably large. Industrial Applicability

In accordance with the invention, the first and the second members are made of materials having different laser beam transmissivities; namely, the former being made of a transmissive thermoplastic resin and the latter member being made of an absorptive thermoplastic resin, so that the welding strength can be increased and the strength variations can be reduced. Furthermore, no burrs develop at the welded portion, and therefore the quality of the welded portion can be improved. Thus, the invention can be used for the welding of various kinds of resin products or components.

## Claims

1. A method for laser welding thermoplastic resin members, comprising bringing a first member comprised of a transmissive thermoplastic resin that transmits a laser beam into contact with a second member comprised of an absorptive thermoplastic resin that absorbs a laser beam, melting their contact surfaces with a laser beam, and welding the two members, said method further comprising:
bringing said first member and said second member into contact with each other, pre-heating at least the contact surfaces of the two members at a temperature lower than their melting temperatures, irradiating said contact surfaces with a laser beam that is shone from the side of said first member, melting at least one of said contact surfaces of said two members, and then post-heating the melted portion at a temperature lower than its melting temperature.

2. The method for laser welding thermoplastic resin members according to claim 1, wherein the pre-heating and the post-heating of said contact surfaces are conducted by heating the inside of a space in which said two members are housed.

3. The method for laser welding thermoplastic resin members according to claim 1, wherein the pre-heating and the post-heating of said contact surfaces are conducted by blowing hot air at said two members.

4. The method for laser welding thermoplastic resin members according to claim 1, wherein the pre-heating and the post-heating of said contact surfaces are conducted by irradiating at least one of said contact surfaces of said two members with a preliminary laser beam that is shone from the side of said first member.

5. A method for laser welding thermoplastic resin members, comprising bringing a first member comprised of a transmissive thermoplastic resin that transmits a laser beam into contact with a second member comprised of an absorptive thermoplastic resin that absorbs a laser beam, melting their contact surfaces with a laser beam, and welding the two members, said method further comprising:
bringing said first and said second members into contact with each other, irradiating said contact surfaces with a laser beam that is shone from the side of said first member, melting at least one of said contact surfaces of said two members, post-heating a melted portion of said two members at a temperature lower than its melting temperature, and then additionally post-heating said melted portion at an even lower temperature.

6. An apparatus for laser welding thermoplastic resin members, wherein a first member comprised of a transmissive thermoplastic resin that transmits a laser beam is brought into contact with a second member comprised of an absorptive thermoplastic resin that absorbs a laser beam, wherein the contact surfaces of the two members are melted by a laser beam so as to joint the two members, said apparatus comprising:
a pre-heating means for pre-heating at least the contact surfaces of said first member and said second member at a temperature lower than their melting temperature;
a laser beam generating means for irradiating at least one of the contact surfaces of said first and said second members with a laser beam that is shone from the side of said first member; and
a post-heating means for post-heating the melted contact surfaces at a temperature lower than their melting temperature.

7. The apparatus for laser welding thermoplastic resin members according to claim 6, wherein said pre-heating means and said post-heating means comprise a casing for housing said first member and said second member, and a heating means for heating the inside of said casing.

8. The apparatus for laser welding thermoplastic resin members according to claim 6, wherein said pre-heating means and said post-heating means comprise a hot air supply means for heating said first member and said second member.

9. An apparatus for laser welding thermoplastic resin members, wherein a first member comprised of a transmissive thermoplastic resin that transmits a laser beam is brought into contact with a second member comprised of an absorptive thermoplastic resin that absorbs a laser beam, wherein at least one of their contact surfaces is irradiated with a laser beam generated by a laser beam generating means that is shone from the side of said first member and melted so as to join the two members,
wherein said laser beam generating means comprises:
a first heating means for pre-heating said contact surfaces at a temperature lower than their melting temperature;
a second heating means for melting at least one of said contact surfaces; and
a third heating means for post-heating said contact surfaces at a temperature lower than their melting temperature.

10. The apparatus for laser welding thermoplastic resin members according to claim 9, wherein said first, said second, and said third heating means separate a laser beam generated by a single laser beam generating means, wherein said second heating means constitutes a main-heating means and has an intensity distribution of the top-hat distribution type, and wherein said first and said third heating means generate a laser beam having an intensity distribution of the Gaussian distribution type.

11. The apparatus for laser welding thermoplastic resin members according to claim 9, wherein said first, said second, and said third heating means are individually comprised of separate laser beam generating means, wherein said second heating means constitutes a main-heating means and generates a laser beam having an intensity distribution of the top-hat distribution type, and wherein said first and third heating means generate a laser beam having an intensity distribution of the Gaussian distribution type.

12. The apparatus for laser welding thermoplastic resin members according to claim 9, wherein said first, said second, and said third heating means are individually comprised of separate laser beam generating means, wherein said second heating means constitutes a main-heating means and generates a laser beam, the focal position of which is coincident with said contact surfaces, and wherein said first and third heating means generate a laser beam the focal position of which is not coincident with said contact surfaces.

13. An apparatus for laser welding thermoplastic resin members, wherein a first member comprised of a transmissive thermoplastic resin that transmits a laser beam is brought into contact with a second member comprised of an absorptive thermoplastic resin that absorbs a laser beam, wherein their contact surfaces are irradiated with a laser beam so as to melt them and join the members, said apparatus comprising:
a laser beam generating means for irradiating said first and said second members with a laser beam that is shone from the side of said first member so as to melt at least one of said contact surfaces; and
a focus-adjusting transfer means for moving said laser beam generating means and adjusting the focal position of the laser beam that is generated,
wherein the density of energy with which said contact surfaces are heated is adjusted by adjusting the focal position of the laser beam.
